# EUROPÄISCHE PATENTSCHRIFT

(11) **EP 1 711 900 B1**
(45) Veröffentlichungstag und Bekanntmachung des Hinweises auf die Patenterteilung: **05.03.2008**
(21) Anmeldenummer: 05701428.4
(22) Anmeldetag: 04.01.2005
(51) Int. Cl.: G06F 13/38

(54) **AUFNAHMEEINHEIT FÜR EINEN MEMORY-STICK SOWIE ELEKTRONISCHES GERÄT MIT EINER AUFNAHMEEINHEIT FÜR EINEN MEMORY-STICK**
RECEIVING UNIT FOR A MEMORY STICK AND ELECTRONIC DEVICE COMPRISING A RECEIVING UNIT FOR A MEMORY STICK
UNITE RECEPTRICE POUR UNE BARRETTE DE MEMOIRE ET APPAREIL ELECTRONIQUE COMPRENANT UNE UNITE RECEPTRICE POUR UNE BARRETTE DE MEMOIRE

(30) Priorität: 05.02.2004 DE 102004005733
(43) Veröffentlichungstag der Anmeldung: 18.10.2006
(73) Patentinhaber: ROBERT BOSCH GMBH, 70442 Stuttgart (DE)
(72) Erfinder: STEINBERG, Rene, 31135 Hildesheim (DE)
(86) Internationale Anmeldenummer: PCT/EP2005/050012
(87) Internationale Veröffentlichungsnummer: WO 2005/076145

(56) Entgegenhaltungen:
- EP-A- 1 235 157
- FR-A- 2 700 435
- US-A1- 2003 041 203

## Beschreibung

Die Erfindung betrifft eine Aufnahmeeinheit für einen Memory-Stick nach dem Oberbegriff des Anspruchs 1 sowie ein elektronisches Gerät mit einer Aufnahmeeinheit für einen Memory-Stick.

### Stand der Technik:

Bei einem Memory-Stick handelt es sich um einen mobilen wechselbaren Datenträger, der ein Speicherarray aus elektronischen Bauelementen, z.B. Transistoren, und bei einigen Ausführungsformen einen Controller zum Ein- und Auslesen des Speichers umfasst. Mittlerweile sind eine ganze Reihe von Memory-Stick-Typen bekannt geworden, die sich insbesondere durch die äußere Bauform und die Anordnung der Kontakte unterscheiden. Beispielhaft ist der USB-Memory" Stick, die Smart-Media-Card, die MultiMediaCard oder die SD-Memory-Card zu nennen.

Solche Memory-Sticks erfreuen sich im Vergleich zu herkömmlichen wechselbaren Datenträgern, wie CDs, insbesondere aufgrund ihrer geringen Baugröße und der schnellen Verfügbarkeit der Daten großer Beliebtheit.

Regelmäßig werden Memory-Sticks zum Datenaustausch entfernter Rechner oder in der Consumer-Anwendung für z.B. Digitalkameras bzw. Geräte zum Anhören von Musikdaten, beispielsweise im MP3-Format verwendet.

USB-Memory-Sticks sind vor allem im Austausch von Daten zwischen Rechnern interessant, da PCs neuerer Generation über eine USB-Schnittstelle verfügen. USB steht für Universal Serial Bus.

### Aufgabe und Vorteile der Erfindung:

Der Erfindung liegt die Aufgabe zugrunde, die Einsatzmöglichkeiten eines Memory-Sticks zu erweitern.

Diese Aufgabe wird durch die Merkmale des Anspruchs 1 und 6 gelöst.

In den Unteransprüchen sind vorteilhafte und zweckmäßige Weiterbildungen der Erfindung angegeben.

Die Erfindung geht von einer Aufnahmeeinheit für die physische Aufnahme eines Memory-Stick aus, die eine Einsteckeinrichtung umfasst, welche zu den Kontakten des Memory-Sticks passende Gegenkontakte aufweist. Der Kern der Erfindung liegt nun darin, dass die Einsteckeinrichtung mit einem mechanisch verstellbaren elektrischen Betätigungselement gekoppelt ist, so dass durch eine manuelle Betätigung eines eingesetzten Memory-Sticks eine Schalt- und/oder Einstellbewegung am Betätigungselement ausgeführt werden kann. Dieser Vorgehensweise liegt die Erkenntnis zugrunde, dass insbesondere der Einsteckvorgang eines Memory-Sticks mit einer Schalt- oder Einstellbewegung gekoppelt werden kann. Auf diese Weise lässt sich die manuelle . Bedienung eines elektronischen Gerätes, an welchem ein Memory-Stick verwendet werden kann, rationalisieren. Außerdem ist es nicht notwendig auf der Bedienseite eines elektronischen Gerätes zusätzlich zum Einsteckplatz für einen Memory-Stick ein separates Betätigungselement vorzusehen.

Dies kann vor allem dort von Vorteil sein, wo ohnehin Einbauraum für ein elektronisches Gerät und dessen bedienbare Sichtseite begrenzt ist. Für Automotivanwendungen ist es bevorzugt, wenn der Memory-Stick im Hinblick auf Klimaanforderungen und/oder die Formgebung angepasst ist. Insbesondere sollte ein solcher Memory-Stick für einen Temperaturbereich von - 40° C bis + 85° C funktionsfähig sein und möglichst eine Form aufweisen, die die Gefahr für einen Fahrzeuginsassen sich z.B. bei einem Aufprall daran zu verletzten, bestenfalls ausschließt. Diese Forderung kann beispielsweise durch eine abgerundete Formgebung erfüllt werden.

In einer vorteilhaften Ausgestaltung der Erfindung umfasst das Betätigungselement einen Schalter oder Taster. Durch diese Maßnahme kann der Memory-Stick in die Einsteckeinrichtung eingefügt werden und im gleichen Bewegungsablauf durch ein axiales Eindrücken des Memory-Sticks der Taster oder Schalter betätigt werden. Der Schaltpunkt kann durch entsprechende Ausgestaltung des Betätigungselements so eingestellt werden, dass er haptisch und/oder akustisch deutlich für den Bediener wahrnehmbar ist. Mit einem Taster oder Schalter lässt sich an einem elektronischem Gerät beispielsweise eine Ein- und Ausschaltfunktion der Energieversorgung realisieren.

Im Weiteren ist es besonders bevorzugt, wenn das Betätigungselement alternativ oder zusätzlich einen Inkrementalgeber besitzt. Mit einem als Drehgeber ausgestalteten Inkrementalgeber kann beispielsweise an einem elektronischen Gerät eine Lautstärkeregelung durch Drehen des Memory-Stick vorgenommen werden. Auch die Drehbewegung kann haptisch und/oder akustisch zur besseren Wahrnehmung für eine Bedienperson hervorgehoben werden.

Anstatt eines Inkrementalgebers kann auch ein Potentiometer zum Einsatz kommen, um kontinuierlich einen gewünschten Parameter durch Verdrehen oder auch eine Axialverschiebung des Memory-Sticks einstellen zu können.

Um einen Memory-Stick leicht und sicher in einer Einsteckvorrichtung platzieren zu können, wird im Weiteren vorgeschlagen, dass die Einsteckvorrichtung eine Einfügehilfe besitzt. Dies ist insbesondere dann vorteilhaft, wenn das Betätigungselement drehbar ist, so dass auf diese Weise der Memory-Stick durch die Einfügehilfe auch bei beliebiger Verdrehstellung immer zielgerichtet einsteckbar ist.

Vorzugsweise ist das Betätigungselement in Einsteckrichtung des Memory-Sticks betrachtet, hinter der Einsteckvorrichtung positioniert. Vorteilhafterweise wird die Einsteckvorrichtung auf ein entsprechendes Betätigungselement aufgesetzt;

Die Vorteile einer erfindungsgemäßen Aufnahmeeinrichtung kommen besonders beim Autoradio oder einem Auto-Navigationssystem zum Tragen.

Bei einem Autoradio können auf dem Memory-Stick insbesondere Musikdaten oder individuelle Daten eines Benutzers, wie eine Stationstastenbelegung abgelegt werden, die beim Einstecken in das Autoradio nach z.B. einer weiteren kurzen Drückbewegung, die das Autoradio einschaltet, von einer entsprechenden Elektronikeinheit des Autoradios ausgelesen werden können. Durch Verdrehen des Memory-Sticks, was z.B. von einem Drehinkrementalgeber aufgenommen wird, kann dann zusätzlich z.B. die Lautstärke am Autoradio reguliert werden. Auf diese Weise lässt sich in der Bedienoberfläche des Autoradios auf der Bedienoberfläche ein Element zum Ein- und Ausschalten des Radios und zur Lautstärkeregelung einsparen, so dass die Benutzung eines Memory-Sticks keinen zusätzlichen Platz erfordert.

Außerdem lässt sich der Memory-Stick als Diebstahlschutz einsetzen, indem auf dem Memory-Stick z.B. ein Code abgelegt ist, der nach dem Einstecken des Memory-Sticks im Autoradio an das Autoradio übertragen werden muss, um dieses in Gang setzten zu können.

Beim Einsatz eines Memory-Sticks bei einem Auto-Navigationssystem kann insbesondere eine Datenübertragung von beispielsweise einer an einem externen Rechner vorgeplanten Route oder eine Rückübertragung einer gefahrenen Route vorgenommen werden. Dieser Vorteil bietet sich unabhängig von einer Kombination des Memory-Sticks mit einem erfindungsgemäßen Betätigungselement. In Verbindung mit dem Betätigungselement ergeben sich jedoch insbesondere die oben erwähnten Platz- bzw. Bedienungsvorteile.

### Zeichnungen:

Mehrere Ausführungsbeispiele der Erfindung sind in den Zeichnungen dargestellt und unter Angabe weiterer Vorteile und Einzelheiten nachstehend näher erläutert. Es zeigen
- Figur 1a: den schematischen Aufbau einer Aufnahmeeinheit mit Einsteckeinrichtung und Betätigungselement in räumlicher Darstellung,
- Figur 1b: einen herkömmlichen USB-Memory-Stick passend zu einer Aufnahmeeinheit gemäß Figur 1a in räumlicher Darstellung,
- Figur 2: in schematischer Draufsicht eine Kontaktanordnung für Schleifkontakte eines Betätigungselements einer Aufnahmeeinheit gemäß Figur 1a,
- Figur 3: in Draufsicht ein teilweise geöffnetes Autoradio mit Anordnung einer Aufnahmeeinheit gemäß Figur 1a und
- Figur 4: im Blockschaltbild der Aufbau eines Autoradios.

### Beschreibung der Ausführungsbeispiele:

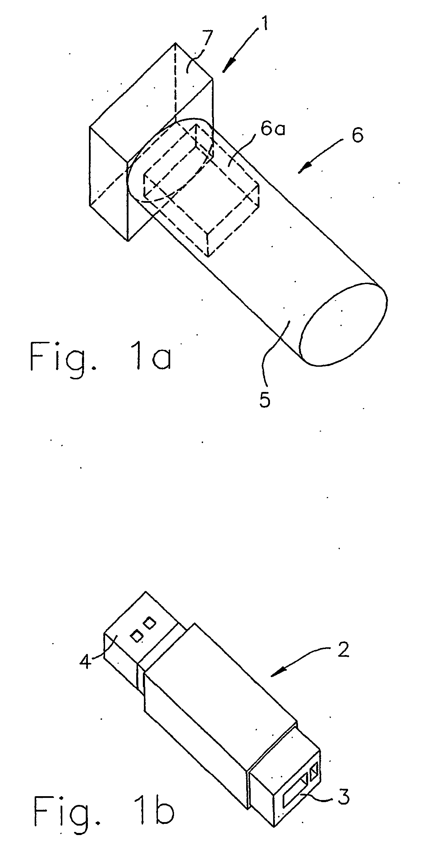

Figur 1a zeigt eine Aufnahmeeinheit 1 für hier beispielhaft einen USB-Memory-Stick 2 gemäß Figur 1b. Ein USB-Memory-Stick weist eine USB-Einsteckbuchse passend zu einer bekannten USB-Schnittstelle auf.

Der in Figur 1b dargestellte Memory-Stick besitzt beispielsweise einen Speicher mit einer Speicherkapazität von 32 MB, der nach dem Prinzip der Flash-Speicherung arbeitet. Der beispielhaft dargestellte Memory-Stick 2 umfasst einen Grundkörper 3 mit einer 4-poligen Einsteckbuchse 4, der 64 mm lang, 8 mm hoch und 18 mm breit ist.

Eine Einsteckeinrichtung 6 der Aufnahmeeinheit 1 umfasst eine Einfügehilfe 5, die so ausgestaltet ist, dass ein einzuführender Memory-Stick zielsicher auf eine Einsteckbuchse 6a trifft, die im vorliegenden Fall vorzugsweise als Gegenstück zur USB-Einsteckbuchse, 4 des USB-Memory-Sticks 2 ausgestaltet ist. Die Einsteckeinrichtung 6 sitzt auf einem Betätigungselement 7, das z.B. eine elektrische Schaltfunktion (Schalter- oder Tasterfunktion) und vorzugsweise zusätzlich die Funktion eines Drehinkrementalgebers umfasst. Betätigt wird das Betätigungselement über einen eingesteckten Memory-Stick, wie im vorliegenden Fall dem USB-Memory-Stick 2, wenn dieser in der Einsteckeinrichtung steckt.

Durch Verdrehen um die Längsachse des Memory-Sticks kann der Drehinkrementalgeber verstellt werden, was z.B. bei einem Autoradio 8 eine Lautstärkenänderung bewirkt. Durch Drücken auf den Memory-Stick 2, so dass dieser eine lineare Bewegung entlang seiner Längsachse ausführt, kann z.B. eine Schaltfunktion ausgeführt werden. Dazu kann ein Schalter oder ein Taster verwendet werden. Mit der Schaltfunktion wird vorzugsweise das mit der Aufnahmeeinheit 1 versehene elektrische Gerät, z.B ein Autoradio aus- und eingeschaltet.

Als Drehgeber eigenen sich eine Vielzahl von Ausführungsvarianten.

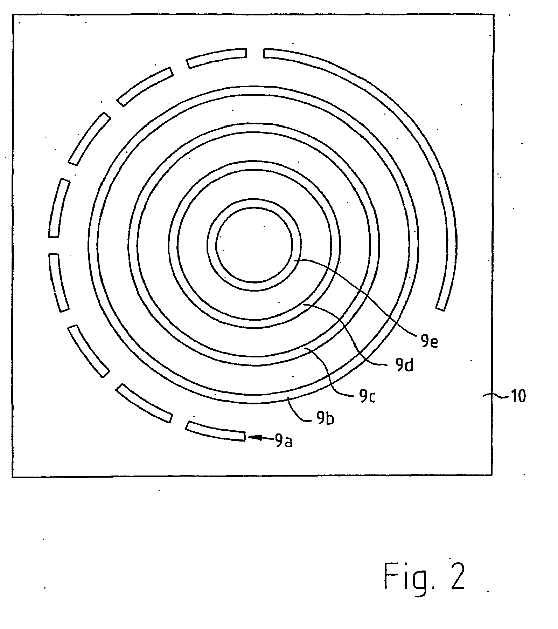

In Figur 2 ist beispielhaft die Schleifkontaktanordnung einer möglichen Ausführungsform dargestellt.

Eine solche Ausführungsform weist 5 Schleifer auf (nicht dargestellt), die auf konzentrischen Kreisringkontakten 9a bis 9e durch Drehen um eine Drehachse bewegt werden können. Dabei sind die vier Kreisringkontakte 9b bis 9e vollständige Kreisringe, um die Signale einer 4-poligen USB-Buchse über einen Drehgeber führen zu können. Der außenliegende Kreisringkontakt 9a hingegen ist mehrfach unterbrochen, um eine Inkrementalgeberfunktion beim Darüberführen eines Schleifkontaktes verwirklichen zu können. Die Kreisringkontakte 9a bis 9e sind auf einem entsprechenden Grundkörper 10 (in Figur 2 schematisch als Quadrat dargestellt) angeordnet.

In Figur 2 nicht dargestellt ist eine Öffnung z.B. durch den zentralen Kreisringkontakt 9e zum Durchführen eines Stößelelements, das mit einem entsprechenden Schalt- oder Tasterelement zusammenwirkt.

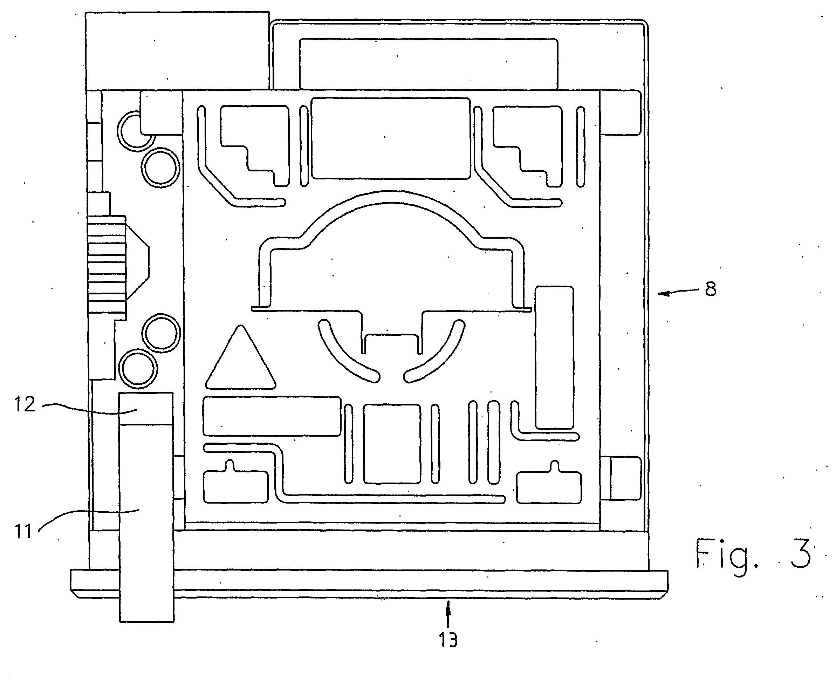

In Figur 3 ist durch zwei schematisch dargestellte Rechtecke 11, 12 in der Draufsicht eines teilweise geöffneten Autoradios die Anordnung der Aufnahmeeinheit 1 mit USB-Memory-Stick 2 symbolisiert. Auf der Frontseite 13 des Autoradios sitzt der Memory-Stick 2 vorzugsweise dort, wo normalerweise ein Bedienelement zum Ein- und Ausschaltern des Autoradios bzw. zum Einstellen der Lautstärke sitzt. Ein solches Element kann vollständig durch die Aufnahmeeinheit 1 mit Memory-Stick 2 ersetzt werden.

Das hat den Vorteil, dass für einen Memory-Stick kein gesonderter Platz in der Bedienoberfläche 13 des Autoradios zur Verfügung gestellt werden muss.

Auf dem Memory-Stick können benutzerindividuelle Daten eingespeichert sein, die beim Einstecken und Einschalten des Radios durch eine Druckbewegung des Memory-Sticks in einen entsprechenden Elektronikbereich des Autoradios ausgelesen werden, um z.B. eine gewünschte Stationstastenbelegung zu erhalten, oder auf den Memory-Stick geladene Musikdaten spielen zu können.

Bei Verlassen des Autoradios wird der Memory-Stick vorzugsweise herausgezogen, wodurch das Autoradio nicht mehr funktionsfähig ist. Mit einem auf dem Memory-Stick abgelegten Code kann damit in einfacher Weise ein Diebstahlschutz realisiert werden.

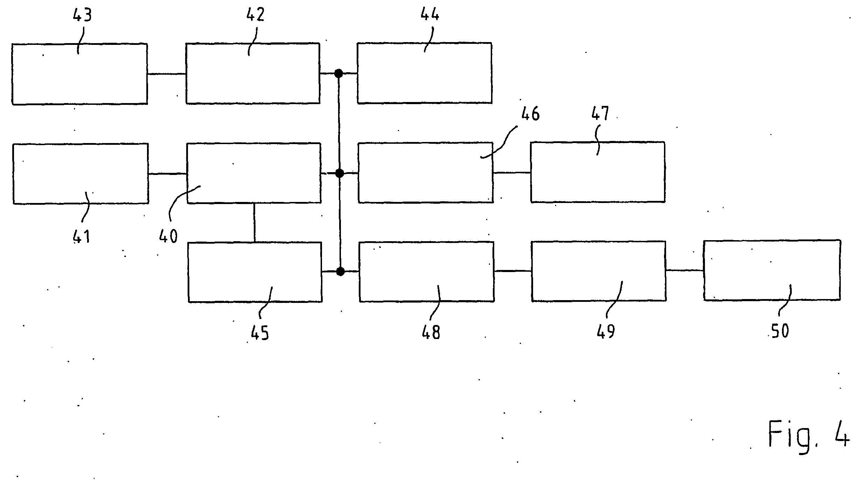

In Figur 4 ist das Blockschaltbild eines Autoradios dargestellt, das eine Aufnahmeeinheit 1 gemäß Figur 1a für ein Memory-Stick 2 gemäß Figur 1b umfasst.

Die Rechtecke 40 und 41 symbolisieren die Aufnahmeeinheit 1 mit z.B. USB-Buchse, Drehgeber und Taster bzw. den USB-Speicher 2. Außerdem verfügt das Autoradio über ein CD-Laufwerk 42, in welches eine CD 43 einlegbar ist. Als wechselbare Datenspeicher können somit eine CD 43 und der USB-Memory-Stick 41 genutzt werden.

Um im MP3-Format auf dem USB-Speicher oder der CD abgelegte Musikdaten abspielen zu können, verfügt das Autoradio über einen MP3-Dekoder 44. Für das Auslesen von Daten aus dem USB-Speicher 41 über die Aufnahmeeinheit 40 ist ein USB-Controller 45 erforderlich. Der Datenfluss wird über einen Geräte-Controller 46 gesteuert, der mit einer Bedientastatur 47 verbunden ist. Daten vom MP3-Dekoder 44, vom CD-Laufwerk 42 oder direkt vom USB-Speicher 41 können zu einem digitalen Signal-Prozessor weitergeleitet werden. Am Ausgang des digitalen Signal-Prozessors sitzt ein Niederfrequenzverstärker 49, um die analogen Ausgangssignale des digitalen Signal-Prozessors für die Wiedergabe auf Lautsprechern 50 zu verstärken.

Zum Bedienen des Autoradios können die Aufnahmeeinheit 40 und die Tastatur 47 genutzt werden, die zur Befehls-Weiterverarbeitung mit dem Geräte-Controller 46 verbunden sind.

## Patentansprüche

1. Aufnahmeeinheit für einen Memory-Stick (2) mit einer Einsteckeinrichtung (6), die zu den Kontakten des Memory-Sticks (2) passende Gegenkontakte aufweist, **dadurch gekennzeichnet, dass** die Einsteckeinrichtung (6) mit einem mechanisch verstellbaren elektrischen Betätigungselement (7) gekoppelt ist, so dass durch eine manuelle Betätigung eines eingesetzten Memory-Sticks (2) eine Schalt- und/oder Einstellbewegung am Betätigungselement (7) ausgeführt werden kann.

2. Aufnahmeeinheit nach Anspruch 1, **dadurch gekennzeichnet, dass** das Betätigungselement (7) einen Schalter oder Taster umfasst.

3. Aufnahmeeinheit nach Anspruch 1 oder 2, **dadurch gekennzeichnet, dass** das Betätigungselement (7) mit einem Inkrementalgeber versehen ist.

4. Aufnahmeeinheit nach einem der vorhergehenden Ansprüche, **dadurch gekennzeichnet, dass** die Einsteckeinrichtung (4) eine Einfügehilfe (5) besitzt.

5. Aufnahmeeinheit nach einem der vorhergehenden Ansprüche, **dadurch gekennzeichnet, dass** das Betätigungselement (7) in Einsteckrichtung des Memory-Sticks (2) betrachtet hinter der Einsteckeinrichtung (6) liegt.

6. Elektronisches Gerät (8) mit einer Aufnahmeeinheit (1) nach einem der vorhergehenden Ansprüche.

7. Elektronisches Gerät nach Anspruch 6, **dadurch gekennzeichnet, dass** das elektronische Gerät ein Autoradio oder ein Auto-Navigationssystem umfasst.

8. Elektronisches Gerät nach Anspruch 6 oder 7, **dadurch gekennzeichnet, dass** eine Elektronikeinheit zum Auslesen von auf dem Memory-Stick (2) abgelegten Benutzerindividuellen Daten vorgesehen ist.

9. Elektronisches Gerät nach Anspruch 6, 7 oder 8, **dadurch gekennzeichnet, dass** eine Einrichtung vorhanden ist, um den Memory-Stick (2) als Diebstahlschutz zu nutzen.

## Claims

1. Holding unit for a memory stick (2) having a plug-in device (6) which has mating contacts matching the contacts of the memory stick (2), **characterized in that** the plug-in device (6) is coupled to a mechanically adjustable electrical operating element (7), so that manual operation of an inserted memory stick (2) can perform a switching and/or setting movement on the operating element (7).

2. Holding unit according to Claim 1, **characterized in that** the operating element (7) comprises a switch or pushbutton.

3. Holding unit according to Claim 1 or 2, **characterized in that** the operating element (7) is provided with an incremental transmitter.

4. Holding unit according to one of the preceding claims, **characterized in that** the plug-in device (4) has an insertion aid (5).

5. Holding unit according to one of the preceding claims, **characterized in that** the operating element (7) is behind the plug-in device (6) when viewed in the plug-in direction of the memory stick (2).

6. Electronic appliance (8) having a holding unit (1) according to one of the preceding claims.

7. Electronic appliance according to Claim 6, **characterized in that** the electronic appliance comprises a car radio or a car navigation system.

8. Electronic appliance according to Claim 6 or 7, **characterized in that** an electronic unit is provided for reading user-specific data stored on the memory stick (2).

9. Electronic appliance according to Claim 6, 7 or 8, **characterized in that** a device is provided for the purpose of using the memory stick (2) as theft prevention.

## Revendications

1. Unité de réception d'une barrette de mémoire (2) comportant une installation d'enfichage (6) avec des contacts complémentaires adaptés aux contacts de la barrette de mémoire (2),
**caractérisée en ce que**
l'installation d'enfichage (6) est couplée à un élément d'actionnement (7) électrique à réglage mécanique de façon que par l'actionnement mécanique d'une barrette de mémoire (2) mise en place, elle exécute un mouvement de commutation et/ou de réglage sur l'élément d'actionnement (7).

2. Unité de réception selon la revendication 1,
**caractérisée en ce que**
l'élément d'actionnement (7) est un commutateur ou une touche.

3. Unité de réception selon la revendication 1 ou 2,
**caractérisée en ce que**
l'élément d'actionnement (7) comporte un capteur incrémental.

4. Unité de réception selon l'une des revendications précédentes,
**caractérisée en ce que**
l'installation d'enfichage (4) comporte une aide d'enfichage (5).

5. Unité de réception selon l'une des revendications précédentes,
**caractérisée en ce que**
l'élément d'actionnement (7) est situé derrière l'installation d'enfichage (6) dans le sens d'enfichage de la barrette de mémoire (2).

6. Appareil électronique (8) comportant une unité de réception (1) selon l'une des revendications précédentes.

7. Appareil électronique selon la revendication 6,
**caractérisé en ce que**
l'appareil électronique comporte un autoradio ou un système de navigation d'automobile.

8. Appareil électronique selon la revendication 6 ou 7,
**caractérisé par**
une unité électronique pour lire les données individuelles de l'utilisateur enregistrées sur la barrette de mémoire (2).

9. Appareil électronique selon les revendications 6, 7 ou 8,
**caractérisé par**
une installation pour utiliser la barrette de mémoire (2) comme dispositif antivol.
